Europäisches Patentamt

European Patent Office

Office européen des brevets

(11) Veröffentlichungsnummer: **0 222 027**

**A1**

(12) ## EUROPÄISCHE PATENTANMELDUNG

(21) Anmeldenummer: 85113799.2

(22) Anmeldetag: 30.10.85

(51) Int. Cl.4: **F16L 23/04**

(43) Veröffentlichungstag der Anmeldung:
20.05.87 Patentblatt 87/21

(84) Benannte Vertragsstaaten:
**BE FR GB IT LU NL**

(71) Anmelder: **Westdeutsche Schweisswerk- und Rohrleitungsbau GmbH**
**Ruhrorter Strasse 112**
**D-4330 Mülheim-Speldorf(DE)**

(72) Erfinder: **Langheim, Manfred**
**Burgweg 14**
**D-4137 Rheurdt(DE)**

(74) Vertreter: **Andrejewski, Walter**
**Patentanwälte Andrejewski, Honke & Partner**
**Postfach 10 02 54 Theaterplatz 3**
**D-4300 Essen 1(DE)**

(54) **Rohrverbindung für eine Hochdruckgasleitung.**

(57) Rohrverbindung für eine Hochdruckgasleitung mit zwei gegeneinandergasetzten Flanschen, (1) die zueinander parallele sowie zur Rohrachse (2) orthogonale Stoßflächen (3) aufweisen, einer Isolierringscheibe (4) zwischen den Stoßflächen, Dichtungsringen (5) sowie einer Verspanneinrichtung, (6) wobei beidseits der Isolierringscheibe in Stoßflächennuten - (7) die Dichtungsringe angeordnet sind und wobei ferner durch dei Verspanneinrichtung die Flansche unter Zwischenschaltung der Isolierringscheibe und der Dichtungsringe gegeneinander spannbar sind. Die Isolierringscheibe weist im Radialschnitt einen T-förmigen Querschnitt im zum Rohrinnern weisenden T-Balken (8) auf, dessan Balkenschenkel (9) als Isolierbunde in umlaufende, zum Rohrinnern offene Auskammerungen (10) mit Auskammerungsboden - (11) und Auskammerungsbegrenzungsfläche (12) der Flansche eingeiegt sind. Die Auskammerungsböden weisen jeder zumindest eine umlaufende Auskammerungsbodennut (13) auf, in die ein zwischen Flansch und Isolierbund angeordneter Dichtungsring (14) als Primärdichtung eingelegt ist.

## Rohrverbindung für eine Hochdruckgasleitung

Die Erfindung bezieht sich gattungsgemäß auf eine Rohrverbindung für eine Hochdruckgasleitung mit zwei gegeneinandergesetzten Flanschen, die zueinander parallel sowie zur Rohrachse orthogonale Stoßflächen aufweisen, einer Isolierringscheibe zwischen den Stoßflächen, Dichtungsringen sowie einer Verspanneinrichtung, wobei beidseits der Isolierringscheibe in Stoßflächennuten die Dichtungsringe angeordnet sind und wobei ferner durch die Verspanneinrichtung die Flansche unter Zwischenschaltung der Isolierringscheibe und der Dichtungsringe gegeneinander spannbar sind. -Es versteht sich, daß bei derartigen Rohrverbindungen die Isolierringscheibe aus einem Werkstoff besteht, der unter den Rohrverbindungsbeanspruchungen nicht fließt. Im allgemeinen wird mit einem sogenannten Hartgewebe gearbeitet. Die Dichtungsringe können nach Art von O-Ringdichtungen aufgebaut sein und bestehen im allgemeinen aus einem elastisch verformbaren, inkompressiblen Werkstoff. Derartige Rohrverbindungen werden auch als Isolierverbindungen bezeichnet. Sie werden bei Hochdruckgasleitungen eingesetzt, wenn beispielsweise ein kathodischer Korrosionsschutz angewendet und nicht zu schützende Teile eines Rohrsystems abgetrennt werden müssen, so z.B. niederohmig geerdete Anlagen. Sie werden aber auch eingesetzt, wenn die elektrische Längsleitfähigkeit einer Hochdruckgasleitung unterbrochen werden muß, weil sonst vagabundierende oder durch Elementbildung erzeugte elektrische Gleichströme sich konzentrieren und zu starker Korrosion führen können. Sie sind fernerhin erforderlich, wenn der Einflußbereich von Rohrleitungen bei Kreuzungen mit Hochspannungsfreileitungen oder elektrischen Bahnlinien abgetrennt werden muß, damit eine niederohmige Erdung des beeinflußten Bereiches möglich wird. Auch wenn ein Potentialausgleich verschiedener Leitungssysteme (Gas, Wasser, Elektrizität, Fernsehantenne, Blitzableiter) innerhalb eines Gebäudes hergestellt werden müssen, werden solche Isolierverbindungen eingesetzt, damit im Störfall eine für den Menschen gefahrlose Erdableitung von elektrischen Fehlerstörungen gewährleistet ist. Die Verspanneinrichtung kann bei solchen Rohrverbindungen auf verschiedene Weise ausgeführt sein. Beispielsweise kann es sich um Schraubver bindungen handeln, auch um solche mit Überwurfring, im Rahmen der Verspanneinrichtung kann aber auch mit Schweißverbindungen gearbeitet werden.

Bei der (aus der Praxis) bekannten gattungsgemäßen Rohrverbindung ist die Isolierringscheibe im Radialschnitt eine ebene Scheibe, die im allgemeinen mit den Flanschen bzw. mit der Rohrwandung zum Rohrinnern hin bündig abschließt. Eine Abdichtung erfolgt also lediglich beidseits der Isolierringscheibe durch die in Stoßflächennuten der Stoßflächen eingelegten Dichtungsringe. Dabei ist es bekannt, in radialer Richtung mit Abstand übereinander mehrere Dichtungsringe an jeder Seite der Isolierringscheibe vorzusehen. Das läßt sich zwar so einrichten, daß eine ausreichende Abdichtung gewährleistet ist, diese ist jedoch gefährdet, wenn wider Erwarten der Werkstoff der Isolierringscheibe unter dem Einfluß der Verbindungskräfte gleichsam ausweicht oder kriecht. Im Rahmen der bekannten Maßnahmen ist nicht sichergestellt, daß der Innendruck der Hochdruckgasleitung die Dichtkräfte unterstützt.

Der Erfindung liegt die Aufgabe zugrunde, eine gattungsgemäße Rohrverbindung so weiter auszubilden, daß der Innendruck der Hochdruckgasleitung die Dichtkräfte unterstützt.

Zur Lösung dieser Aufgabe lehrt die Erfindung, daß die Isolierringscheibe im Radialschnitt einen T-förmigen Querschnitt mit zum Rohrinnern weisendem T-Balken aufweist, dessen Balkenschenkel als Isolierbunde in umlaufende, zum Rohrinnern hin offene Auskammerungen mit Auskammerungsboden und Auskammerungsbegrenzungsfläche der Flansche eingelegt sind, und daß die Auskammerungsböden jeder zumindest eine umlaufende Auskammerungsbodennut aufweisen, in die ein zwischen Flansch und Isolierbund angeordneter Dichtungsring als Primärdichtung eingelagt ist.

Wie bereits erwähnt, ist im Rahmen der Erfindung die Gestaltung der Verspanneinrichtung beliebig. Nach bevorzugter Ausführungsform der Erfindung weist die Verspanneinrichtung einen Überwurfring auf, der zumindest an einer Seite mit einem Innenflansch unter Zwischenschaltung einer weiteren Isolierringscheibe an einem Außenbund des zugeordneten Flansches abgestützt ist. Hier empfiehlt es sich, die Anordnung so zu treffen, daß der Außenbund des Flansches zum Anschlußrohr hin flachkonisch vorspringend angeordnet und der Innenflansch angepaßt ist.

Die Erfindung geht von der Erkenntnis aus, daß bei einer gattungsgemäßen Rohrverbindung die Isolierringscheibe eine zusätzliche Funktion erfüllt, nämlich zur Erzeugung der Dichtkraft mitwirken kann, wenn sie in der beschriebenen Weise mit Isolierbunden ausgerüstet wird und diese so angeordnet werden, daß sie mit Dichtungsringen wechselwirken und unter dem Druck des Gases in der Hochdruckgasleitung diese Dichtungsringe beaufschlagen. Im Ergebnis wird die Funktionssicherheit einer solchen Rohrverbindung in beachtlichem Maße verbessert, und zwar mit extrem langer Lebensdauer.

Im folgenden wird die Erfindung anhand einer lediglich ein Ausführungsbeispiel darstellenden Zeichnung ausführlicher erläutert.

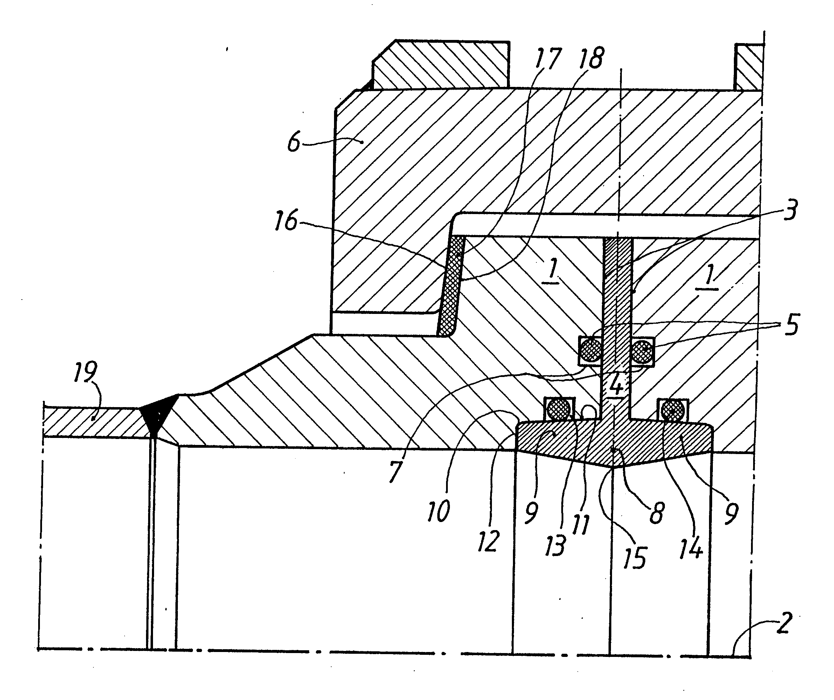

Die einzige Figur zeigt einen Axialschnitt durch eine erfindungsgemäße Rohrverbindung im verspannten Zustand.

Die in der Figur dargestellte Rohrverbindung ist für eine Hochdruckgasleitung bestimmt. Sie besitzt zwei gegeneinandergesetzte Flansche 1, die zueinander parallele sowie zur Rohrachse 2 orthogonale Stoßflächen 3 aufweisen. Zur Rohrverbindung gehört fernerhin eine Isolierringscheibe 4 zwischen den Stoßflächen 3. Im übrigen sind Dichtungsringe 5 vorgesehen. Die Rohrverbindung ist mit einer Verspanneinrichtung ausgerüstet, von der der Überwurfring 6 gezeichnet ist. -Die Aufbringung der Verspannkräfte ist beliebig und wurde zeichnerisch nicht dargestellt.

Die Anordnung ist jedoch jedenfalls so getroffen, daß beidseits der Isolierringscheibe 4 in Stoßflächennuten 7 der Stoßflächen 3 die Dichtungsringe 5 angeordnet sind, wobei fernerhin durch die Verspanneinrichtung die Flansche 1 unter Zwischenschaltung der Isolierringscheibe 4 und der Dichtungsringe 5 gegeneinander gespannt sind. -Die Figur ist rechts abgebrochen gezeichnet worden. Sie mag bezüglich der Bauteile der Rohrleitung nach rechts hin symmetrisch zur linken Seite ergänzt oder anders gestaltet sein. Die Verspanneinrichtung ist anzupassen.

Die Isolierringscheibe 4 besitzt einen im Radialschnitt T-förmigen Querschnitt mit zum Rohrinnern weisendem T-Balken 8, dessen Balkenschenkel 9 als Isolierbunde in umlaufende, zum Rohrinnern offene Auskammerungen 10 der Flanschbereiche eingelegt sind, wobei die Auskammerungen 10 einen Auskammerungsboden 11 und eine Auskammerungsbegrenzungsfläche 12 aufweisen, zu den Stoßflächen 3 hin jedoch offen sind. Die Auskammerungsböden 11 besitzen jeder im Ausführungsbeispiel eine umlaufende Auskammerungsbodennut 13, im die ein zwischen Flansch 1 und Isolierbund 9 angeordneter Dichtungsring 14 als Primärdichtung eingelegt ist. Die Isolierbunde 9 beaufschlagen diesen Dichtungsring 14, wobei der Druck des Gases in der Hochdruckgasleitung diese Beaufschlagungen und damit die Dichtwirkung unterstützt. -Im Ausführungsbeispiel besitzt der Balkenschenkel 9 einen zum Rohrinnern firstförmig gestalteten Vorsprung 15. Die Verspanneinrichtung ist mit einem Überwurfring 6 ausgerüstet, der zumindest an einer Seite mit einem Innenflansch 16 unter Zwischenschaltung einer weiteren Isolierringscheibe 17 an einem Außenbund 16 des zugeordneten Flansches 1 abgestützt ist. Hier ist die Anordnung so getroffen, daß der Außenbund 18 des Flansches 1 zum Anschlußrohr 19 hin flachkonisch vorspringend angeordnet und der Innenflansch 16 angepaßt ist.

## Ansprüche

1. Rohrverbindung für eine Hochdruckgasleitung mit
zwei gegeneinandergesetzten Flanschen, die zueinander, parallele sowie zur Rohrachse orthogonale stoßflächen aufweisen,
einer Isolierringscheibe zwischen den Stoßflächen,
Dichtungsringen sowie
einer Verspanneinrichtung,
wobei beidseits der Isolierringscheibe in Stoßflächennuten die Dichtungsringe angeordnet sind und wobei ferner durch die Verspanneinrichtung die Flansche unter Zwischenschaltung der Isolierringscheibe und der Dichtungsringe gegeneinander spannbar sind, **dadurch gekennzeichnet,** daß die Isolierringscheibe (4) im Radialschnitt einen T-förmigen Querschnitt mit zum Rohrinnern weisendem T-Balken (8) aufweist,
dessen Balkenschenkel als Isolierbunde (9) in umlaufende, zum Rohrinnern offene Auskammerungen (10) mit Auskammerungsboden (11) und Auskammerungsbegrenzungsfläche (12) der Flansche (1) eingelegt sind,
und daß die Auskammerungsböden (11) jeder zumindest eine umlaufende Auskammerungsbodennut (13) aufweisen, in die ein zwischen Flansch (1) und Isolierbund (9) angeordneter Dichtungsring - (14) als Primärdichtung eingelegt ist.

2. Rohrverbindung nach Anspruch 1, dadurch gekennzeichnet, daß die Verspanneinrichtung einen Überwurfring (8) aufweist, der zumindest an einer Seite mit einem Innenflansch (16) unter Zwischenschaltung einer weiteren Isolierringscheibe (17) an einem Außenbund (18) des zugeordneten Flansches (1) abgestützt ist.

3. Rohrverbindung nach Anspruch 2, dadurch gekennzeichnet, daß der Außenbund (18) des Flansches (1) zum Anschlußrohr (19) hin flachkonisch vorspringend angeordnet und der Innenflansch - (16) angepaßt ist.

0 222 027

| | EUROPÄISCHER RECHERCHENBERICHT | Nummer der Anmeldung |
|---|---|---|
| Europäisches Patentamt | | EP 85 11 3799 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-B-1 162 140 (ERBEN DES MILTON P. LAURENT) * Figuren 5, 6 * | 1-3 | F 16 L 23/04 |
| A | US-A-3 967 841 (KENDRICK et al.) * Figuren 1, 3 * | 1,3 | |
| A | US-A-3 967 842 (KENDRICK) * Figur 1 * | 1,3 | |
| A | US-A-3 554 581 (MASON et al.) * Figuren 1, 4 * | 1,3 | |
| A | US-A-4 218 080 (KENDRICK) * Figuren 1, 4 * | 1 | |
| A | US-E- 27 389 (TILLMANN) * Figuren 1, 2 * | 1 | RECHERCHIERTE SACHGEBIETE (Int. Cl.4) F 16 L 23/00 |
| A | US-A-3 339 948 (WEITZEL) * Figuren 5, 8 * | 1 | |
| A | US-A-2 900 199 (LOGAN) * Figur 2c * | 1 | |
| A | CH-A- 45 824 (KESSELSCHMIEDE RICHTERSWIL) * Figur 1 * | 1 | |

Der vorliegende Recherchenbericht wurde für alle Patentansprüche erstellt.

| Recherchenort BERLIN | Abschlußdatum der Recherche 04-06-1986 | Prüfer SCHLABBACH M |
|---|---|---|